# EUROPÄISCHE PATENTSCHRIFT

(11) **EP 3 535 039 B1**
(45) Veröffentlichungstag und Bekanntmachung des Hinweises auf die Patenterteilung: **26.08.2020**
(21) Anmeldenummer: 17771683.4
(22) Anmeldetag: 04.09.2017
(51) Int. Cl.: B01D 35/153, B01D 35/16, B01D 36/00, B01D 29/21

(54) **FILTEREINRICHTUNG**
FILTER DEVICE
DISPOSITIF DE FILTRATION

(30) Priorität: 04.11.2016 DE 102016221686
(43) Veröffentlichungstag der Anmeldung: 11.09.2019
(73) Patentinhaber: Mahle International GmbH, 70376 Stuttgart (DE)
(72) Erfinder: HOFMANN, Denis, 70563 Stuttgart (DE); KOLLMANN, Andreas, 9421 Eitweg (AT); WIELER, Patrick, 73660 Urbach (DE)
(74) Vertreter: BRP Renaud & Partner mbB Rechtsanwälte Patentanwälte Steuerberater
(86) Internationale Anmeldenummer: PCT/EP2017/072105
(87) Internationale Veröffentlichungsnummer: WO 2018/082829

(56) Entgegenhaltungen:
- EP-A1- 1 520 613
- EP-A1- 2 468 378
- WO-A1-2012/044636
- DE-A1-102007 062 221
- DE-A1-102014 216 637
- US-A1- 2009 308 802

## Beschreibung

Die vorliegende Erfindung betrifft eine Filtereinrichtung mit einem Filtergehäusetopf gemäß dem Oberbegriff des Anspruchs 1.

Gattungsgemäße Filtereinrichtungen sind hinlänglich und mannigfaltig bekannt. Aus der DE 197 07 132 A1 ist eine Filtereinrichtung mit einem einen Filtergehäusetopf und einen damit verschraubbaren Deckel aufweisenden Gehäuse sowie mit einem darin angeordneten Ringfilterelement bekannt, wobei wenigstens ein Rastmittel vorgesehen ist, mittels dem eine lösbare Rastverbindung zwischen Filterelement und wenigstem einem der Gehäuseteile herstellbar ist. Hierdurch soll es insbesondere ermöglicht werden, das Ringfilterelement einfacher zu montieren bzw. zu demontieren, ohne dabei in direktem Kontakt mit dem Filterelement treten zu müssen.

Aus der DE 10 2012 00 876 C5 ist ein Flüssigkeitsfilter einer Brennkraftmaschine mit einem Filtergehäuse bekannt, das mit einem Flüssigkeitsleitungssystem verbunden ist. Ein Gehäusetopf ist dabei über eine Gehäuse-Deckel-Verbindung mit einem Gehäusedeckel verbunden, wobei diese Verbindung mittels einer Gehäusedrehbewegung des Gehäusetopfs relativ zum Gehäusedeckel um eine gedachte Montageachse verriegelt und entriegelt werden kann. Ein Filterelement ist über eine Element-Deckel-Verbindung mit dem Gehäusedeckel verbunden. Die beiden Verbindungen sind dabei derart aufeinander abgestimmt, dass bei einer Drehbewegung des Gehäusetopfes relativ zum Gehäusedeckel zum Öffnen oder Schließen der dortigen Verbindung, diese Drehbewegung mittels der Element-Gehäuse-Verbindung auf das Filterelement übertragen wird, so dass das Filterelement gemeinsam mit dem Gehäusetopf relativ zum Gehäusedeckel gedreht werden kann. Da die Schließrichtung der Gehäuse-Deckel-Verbindung der Öffnungsrichtung der Element-Deckel-Verbindung entspricht, kann beim Verriegeln der Gehäuse-Deckel-Verbindung automatisch die Element-Deckel-Verbindung entriegelt werden, sofern diese vorher verriegelt war. Hierdurch soll insbesondere auch ein Ressourcen schonender Filterelementwechsel ermöglicht werden.

Aus der DE 10 2008 011 616 A1 ist ein Filtergehäuse bekannt, welches sich entlang einer Längsachse erstreckt und zwei lösbar miteinander verbundene Gehäuseteile umfasst. Die Verbindung der beiden Gehäuseteile ist durch Drehung des einen Gehäuseteils in eine Drehrichtung um die Längsachse relativ zum anderen Gehäuseteil lösbar. Darüber hinaus ist eine Drehsicherung für die beiden Gehäuseteile gegeneinander vorgesehen, mit einem Betätigungshebel, der zusammen mit seiner Hebelachse einteilig und materialeinheitlich mit einer Wand eines der beiden Gehäuseteile ausgeführt ist. Hierdurch soll es möglich sein, den Deckel leichter zu montieren bzw. zu demontieren.

Aus der EP 2 468 378 A1 ist eine Filtereinrichtung mit einem in einem Filtergehäusetopf angeordneten Ringfilterelement sowie eine einen zentralen Ablasskanal verschließende Ablassschraube bekannt.

Bei Kraftstoff- bzw. Schmierstofffiltern entstehen insbesondere bei großen Ringfilterelementen, wie beispielsweise bei Nutzfahrzeugfiltern, starke Reibungskräfte zwischen Dichtringen und Dichtflächen. Durch das Quellen und Verkleben der Dichtringe während des Betriebs können diese Kräfte zusätzlich verstärkt werden. Hierdurch kann es im Servicefall dazu kommen, dass die klassischen Haltekräfte einer Clipsverbindung zwischen einem Deckel und dem Ringfilterelement nicht ausreichen, letzteres beim Lösen des Deckels mit aus dem Filtergehäusetopf herauszuziehen, so dass es in diesem verbleibt und umständlich manuell aus diesem entfernt werden muss.

Die vorliegende Erfindung beschäftigt sich daher mit dem Problem, für eine Filtereinrichtung der gattungsgemäßen Art eine verbesserte oder zumindest eine alternative Ausführungsform anzugeben, die insbesondere wartungsfreundlicher ist.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, einen Austausch eines Ringfilterelements bei einer Filtereinrichtung dadurch zu vereinfachen, dass eine unter Umständen während des Betriebs der Filtereinrichtung verklebte Dichtung bereits vor dem eigentlichen Ausbau des Ringfilterelements aus der Filtereinrichtung gelöst wird. Hierzu wird erfindungsgemäß eine Ablassschraube verwendet, die somit nicht nur die Funktion eines Wasserablasses bzw. eines Ablassens von Filterflüssigkeit vor dem Austausch des Ringfilterelements erfüllt, sondern zusätzlich auch eine Demontagehilfe für das Ringfilterelement darstellt. Die erfindungsgemäße Filtereinrichtung weist ein, einen Filtergehäusetopf und einen damit verschraubbaren Deckel aufweisendes Filtergehäuse mit dem darin angeordneten Ringfilterelement auf. Der Filtergehäusetopf besitzt einen zentralen Ablasskanal, in welchem die zuvor erwähnte Ablassschraube angeordnet ist. Diese Ablassschraube weist erfindungsgemäß eine Mitnehmerkontur auf. Das in das Filtergehäuse und insbesondere in den Filtergehäusetopf eingesetzte Ringfilterelement besitzt eine untere Endscheibe mit einer außen liegenden und im Einbauzustand mit dem Filtergehäusetopf zusammenwirkenden Ringdichtung und mit einer mit der Mitnehmerkontur der Ablassschraube zusammenwirkende Gegenmitnehmerkontur. Erfindungsgemäß ist nun die Ablassschraube zwischen zumindest drei Stellungen verstellbar, nämlich einer unteren Stellung, in welcher die Ablassschraube den Ablasskanal dicht verschließt, wobei die untere Stellung die Betriebsstellung darstellt. Die zweite Stellung ist eine Zwischenstellung, in welcher die Ablassschraube den Ablasskanal freigibt, aber noch nicht über ihre Mitnehmerkontur mit der ringfilterelementseitigen bzw. endscheibenseitigen Gegenmitnehmerkontur zusammenwirkt. In dieser Zwischenstellung ist somit ein Ablassen von beispielsweise sich unten in der Filtereinrichtung angesammeltem Wasser möglich. Die dritte Stellung der Ablassschraube ist eine obere Stellung, in welcher die Ablassschraube sowohl den Ablasskanal freigibt, als auch über ihre Mitnehmerkontur mit der ringfilterelementseitigen Gegenmitnehmerkontur zusammenwirkt, wodurch ein Verdrehen der Ablassschraube gleichzeitig auch ein Verdrehen des Ringfilterelements und dabei ein Lösen der unter Umständen mit dem Filtergehäusetopf verklebten Ringdichtung der unteren Endscheibe des Ringfilterelements bewirkt. Erfindungsgemäß sind somit der Ablassschraube zumindest zwei Funktionen zugedacht, nämlich einerseits das Ablassen von beispielsweise abgeschiedenem Wasser oder aber der Filterflüssigkeit zum Austausch des Ringfilterelements und andererseits das Verdrehen des Ringfilterelements, wodurch dieses im Bereich seiner an der unteren Endscheibe außen angeordneten Ringdichtung vom Filtergehäusetopf gelöst wird.

Der Austausch des Ringfilterelements aus der erfindungsgemäßen Filtereinrichtung kann dabei beispielsweise wie folgt erfolgen: Zunächst wird die Ablassschraube von ihrer unteren Stellung in die Zwischenstellung verstellt und über diese in ihre obere Stellung, wobei bereits in der Zwischenstellung ein Ablassen von in dem Filtergehäuse vorhandener Flüssigkeit erfolgt. Durch ein Überführen der Ablassschraube in ihre obere Stellung erfolgt zugleich auch ein Verdrehen des Ringfilterelements, wodurch sich die zwischen diesem und dem Filtergehäuse angeordnete Ringdichtung vom Filtergehäusetopf löst. Anschließend kann der mittels einer Schraubverbindung mit dem Deckel verschraubte Filtergehäusetopf abgeschraubt werden, wobei anschließend durch ein Weiterdrehen der Ablassschraube das Ringfilterelement ebenfalls gedreht und zugleich aus dem Filtergehäusetopf gedrückt wird. Die Begrifflichkeiten "Filtergehäusetopf" und "Deckel" können selbstverständlich auch in umgekehrter Weise verwendet werden, insbesondere für den Fall, dass es sich bei der Filtereinrichtung um ein stehendes Filter handelt.

Bei einer vorteilhaften Weiterbildung der erfindungsgemäßen Lösung weist die ablassschraubenseitige Mitnehmerkontur zumindest zwei, insbesondere axial und/radial abstehende, Flügel auf, wobei die Gegenmitnehmerkontur zumindest zwei Anschlagselemente aufweist, die in der oberen Stellung der Ablassschraube mit den Flügeln der ablassschraubenseitigen Mitnehmerkontur zusammenwirken. Die zumindest zwei Flügel der ablassschraubenseitigen Mitnehmerkontur bewirken dabei einerseits die sich in ihrer oberen Stellung befindlichen Ablassschraube ein axiales Drücken gegen das Ringfilterelement als auch ein Verdrehen desselben über eine Anlage der Flügel an den zugehörigen Anschlagselementen. Durch die insbesondere axial und/oder radial abstehende Ausführungsform kann eine elastische axiale Vorspannung der Flügel gegen die untere Endscheibe des Ringfilterelements erfolgen.

Bei einer weiteren vorteilhaften Ausführungsform der erfindungsgemäßen Lösung ist das Ringfilterelement über ein erstes Gewinde mit dem Filtergehäusetopf verbunden. Dabei sind ein von der unteren Endscheibe des Ringfilterelements zentrisch und axial abstehender Dom mit einem durch Freigänge unterbrochenen Außengewinde sowie axial vom Filtergehäusetopf abstehende und hohlzylindrisch angeordnete Federelemente vorgesehen, an denen jeweils ein komplementär zum Außengewinde ausgebildeter Innengewindeabschnitt angeordnet ist, wobei das Innengewinde und das Außengewinde zusammen das erste Gewinde bilden. Jeder Innengewindeabschnitt erstreckt sich dabei über einen längeren Umfangsabschnitt als ein Freigang. Das erste Gewinde ist zudem gegenläufig zu einem zwischen dem Filtergehäusetopf und der Ablassschraube angeordneten zweiten Gewinde ausgebildet. Durch die gegenläufig angeordneten ersten und zweiten Gewinde ist es besonders einfach, auch vergleichsweise große Ringfilterelemente, beispielsweise Nutzfahrzeuge, zu montieren bzw. zu demontieren. Bei einer Montage wird dabei zunächst das Ringfilterelement im Filtergehäusetopf verschraubt, wobei dieses Verschrauben aufgrund der im Außengewinde des Ringfilterelements vorgesehenen Freigänge mit wenigen Drehbewegungen möglich ist. Anschließend kann die so vormontierte Baugruppe mit dem Deckel verschraubt werden. Die Demontage erfolgt dabei wie im vorherigen Abschnitt beschrieben.

Bei einer weiteren vorteilhaften Ausführungsform der erfindungsgemäßen Lösung sind insgesamt acht Federelemente mit jeweils einem Innengewindeabschnitt vorgesehen. Zusätzlich oder alternativ kann das Außengewinde insgesamt sechs Freigänge aufweisen. Diese spezielle Ausführungsform des Außengewindes und der Innengewindeabschnitt ermöglicht sowohl eine zuverlässige und einfache Montage als auch eine in gleicher Weise zuverlässige und einfache Demontage, bei welcher auf jeden Fall sichergestellt werden kann, dass selbst bei gequollenen Dichtungen und damit hohen Haltekräften zwischen dem Ringfilterelement und dem Filtergehäusetopf, das Ringfilterelement sicher aus dem Filtergehäusetopf herausgezogen werden kann.

Zweckmäßig sind der Dom und das Außengewinde mit seinen Freigängen einstückig mit der unteren Endscheibe ausgebildet. Hier bietet es sich an, die untere Endscheibe zusammen mit dem Dom und dem Außengewinde als kostengünstiges Kunststoffspritzgussteil auszubilden.

Die vorliegende Erfindung beruht weiter auf dem allgemeinen Gedanken, ein Ringfilterelement für eine solche zuvor beschriebene Filtereinrichtung anzugeben, mit einem von einer unteren Endscheibe zentrisch axial abstehenden Dom mit einem durch Freigänge unterbrochenen Außengewinde. Durch die spezielle Ausgestaltung der Innengewindeabschnitt und des Außengewindes kann auch eine Art Schlüssel-Schloss-Prinzip verwirklicht werden, welches den Einsatz eines autorisierten Ringfilterelements erzwingt, wodurch insbesondere eine langfristig erstklassige Filterleistung gewährleistet werden kann.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Schnittdarstellung durch eine erfindungsgemäße Filtereinrichtung bei sich in ihrer unteren Stellung befindlichen Ablassschraube,
- Fig. 2: eine Darstellung wie in Fig. 1, jedoch bei gleichzeitig geschnittener Ablassschraube,
- Fig. 3: eine Darstellung wie in Fig. 2, jedoch bei sich in ihrer Zwischenstellung befindlichen Ablassschraube,
- Fig.4: eine Darstellung wie in Fig. 2, jedoch bei sich in ihrer oberen Stellung befindlichen Ablassschraube,
- Fig. 5: eine Ansicht von unten auf ein Ringfilterelement mit entsprechenden Mitnehmern,
- Fig. 6: eine Ansicht von oben auf die Ablassschraube mit entsprechenden Mitnehmern,
- Fig.7: die gemäß den Fig. 5 und 6 gezeigten Komponenten in Wirkverbindung.

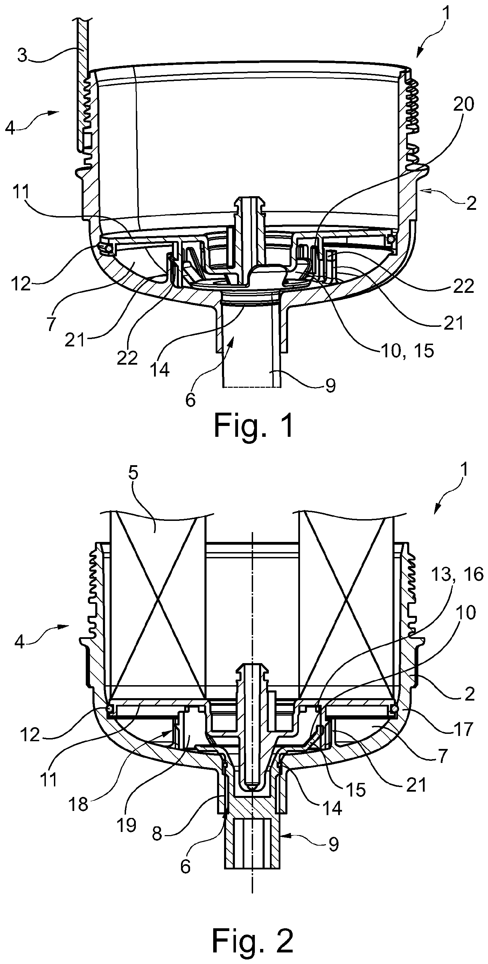

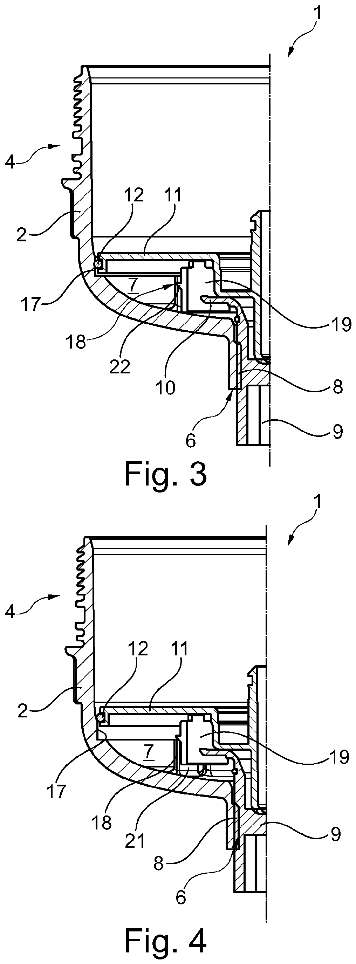

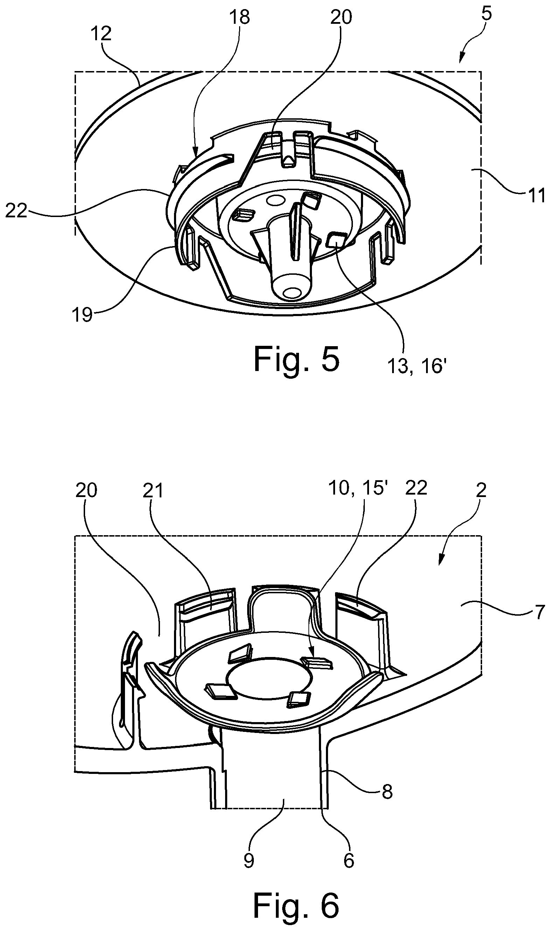

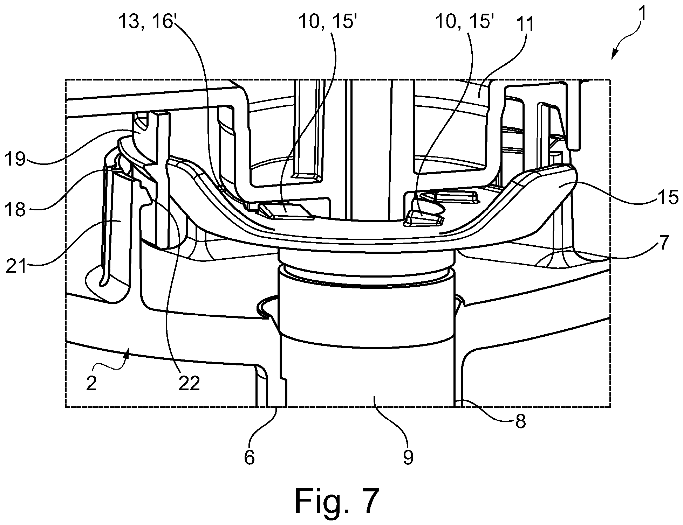

Entsprechend den Fig. 1 bis 4, weist eine erfindungsgemäße Filtereinrichtung 1, welche beispielsweise als Öl- oder Kraftstoff-Filter ausgebildet sein kann, einen Filtergehäusetopf 2 und einen damit verschraubbaren und lediglich in Fig. 1 angedeuteten Deckel 3 auf. Zusammen bilden diese ein Filtergehäuse 4. In dem Filtergehäuse 4 ist ein Ringfilterelement 5 (vgl. Fig. 2) angeordnet. Der Filtergehäusetopf 2 besitzt dabei einen zentralen Ablasskanal 6, über welchen sowohl sich in einem Wassersammelraum 7 angesammeltes Wasser als auch die gesamte Flüssigkeit im Filtergehäusetopf 2 bei einem anstehenden Filterwechsel abgelassen werden können (vgl. auch Fig. 6 und 7). In dem Ablasskanal 6 ist über ein zweites Gewinde 8 drehbar eine Ablassschraube 9 angeordnet, die eine Mitnehmerkontur 10 aufweist. Das Ringfilterelement 5 besitzt eine untere Endscheibe 11 mit einer außenliegenden und im Einbauzustand mit dem Filtergehäusetopf 2 zusammenwirkenden Ringdichtung 12 und mit einer mit der Mitnehmerkontur 10 zusammenwirkenden Gegenmitnehmerkontur 13 auf (vgl. Fig. 5). Die Ablassschraube 9 ist dabei zwischen zumindest drei Stellungen verstellbar, wie dies gemäß den Fig. 1 bis 4 dargestellt ist, nämlich zwischen einer unteren Stellung (vgl. die Fig. 1 und 2), in welcher die Ablassschraube 9 den Ablasskanal 6 dicht verschließt, einer Zwischenstellung (vgl. Fig. 3), in welcher die Ablassschraube 9 den Ablasskanal 6 freigibt, aber noch nicht über ihre Mitnehmerkontur 10 mit der ringfilterelementseitigen Gegenmitnehmerkontur 13 zusammenwirkt und zu guter Letzt einer oberen Stellung (vgl. Fig. 4, 7), in welcher die Ablassschraube 9 den Ablasskanal 6 freigibt und über ihre Mitnehmerkontur 10 mit der ringfilterelementseitigen Gegenmitnehmerkontur 13 zusammenwirkt, wodurch ein Verdrehen der Ablassschraube 9 zugleich auch ein Verdrehen des Ringfilterelements 5 bewirkt.

In der unteren Stellung schließt somit die Ablassschraube 9 den Ablasskanal 6 über eine Ringdichtung 14 dicht ab. In der Zwischenstellung, wie diese gemäß der Fig. 3 dargestellt ist, ist die Ablassschraube 9 bereits so weit nach oben verstellt, dass die Dichtung 14 nicht mehr dicht im Ablasskanal 6 angeordnet ist und in diesem Zustand somit ein Ablassen von beispielsweise Wasser aus dem Wassersammelraum 7 erfolgen kann. In der oberen Stellung kann ebenfalls ein Ablassen von Wasser bzw. Flüssigkeit über den Ablasskanal 6 erfolgen, wobei gleichzeitig bei einem Verdrehen der Ablassschraube 9 in ihrer oberen Stellung über die in diesem Fall zusammenwirkenden Mitnehmerkontur 10 und Gegenmitnehmerkontur 13 ein Verdrehen des Ringfilterelements 5 und damit auch ein Lösen der Ringdichtung 12 erfolgt. Die Ringdichtung 12 dichtet beispielsweise den darunter angeordneten Wassersammelraum 7 von einem darüber angeordneten Roh- oder Reinraum ab und ist elastisch zwischen der unteren Endscheibe 11 und dem Filtergehäusetopf 2 eingeklemmt. Während des Betriebs der Filtereinrichtung 1 kann es dabei zu einem Quellen und auch zu einem Verkleben der Ringdichtung 12 mit der unteren Endscheibe 11 und dem Filtergehäusetopf 2 kommen, wodurch ein Lösen und Herausnehmen des Ringfilterelements 5 aus dem Filtergehäusetopf 2 bei einem gewünschten Wechsel erschwert wird. Dem kann mit der erfindungsgemäßen Ablassschraube 9 entgegengewirkt werden, da diese nicht nur die Funktion des Wasser- bzw. Flüssigkeitsablasses ermöglicht, sondern zudem über ihre Mitnehmerkontur 10 auch ein Verdrehen und damit ein Lösen des Ringfilterelements 5 sowie zugleich auch eine Axialverstellung desselben, wie dies gemäß der Fig. 4 dargestellt ist.

Betrachtet man die ablassschraubenseitige Mitnehmerkontur 10 gemäß den Fig. 1 bis 4, so kann man erkennen, dass diese zumindest zwei, insbesondere axial und/oder radial abstehende, Flügel 15 aufweist. Die Gegenmitnehmerkontur 13 besitzt zumindest zwei Anschlagselemente 16, die in der oberen Stellung der Ablassschraube 9 mit den Flügeln 15 der ablassschraubenseitigen Mitnehmerkontur 10 zusammenwirken und bei einem Verdrehen der Ablassschraube 9 in der oberen Stellung zugleich auch ein Verdrehen des Ringfilterelements 5 bewirken.

Betrachtet man die ablassschraubenseitige Mitnehmerkontur 10 gemäß den Fig. 6 und 7, so kann man erkennen, dass diese zumindest zwei, insbesondere axial abstehende, keilförmige Mitnehmer 15' aufweist, während die Gegenmitnehmerkontur 13 zumindest zwei ebenfalls keilförmige Mitnehmer 16' aufweist (vgl. Fig. 5), die in der oberen Stellung der Ablassschraube 9 mit den Mitnehmern 15' der ablassschraubenseitigen Mitnehmerkontur 10 zusammenwirken, wie dies in Fig. 7 gezeigt ist. Die Mitnehmer 15' und 16' sind dabei in Umfangsrichtung entgegengesetzt zueinander orientiert.

Rein theoretisch können bei geringeren zu übertragenden Kräften auch lediglich radial federnde Laschen vorgesehen sein, beispielsweise in der Art der dargestellten Flügel 15.

Betrachtet man den Filtergehäusetopf 2 gemäß den Fig. 2 bis 4, so kann man erkennen, dass dieser einen zylindrischen Dichtungsabschnitt 17 aufweist, in welchem die Ringdichtung 12 der unteren Endscheibe 11 des Ringfilterelements 5 bei sich in ihrer unteren Stellung und in ihrer Zwischenstellung befindenden Ablassschraube 9 dicht anliegt. Erst bei sich in ihrer oberen Stellung befindenden Ablassschraube 9 werden das Ringfilterelement 5 und damit auch die untere Endscheibe 11 so weit angehoben, dass die Ringdichtung 12 aus dem zylindrischen Dichtungsabschnitt 17 herausgeschoben wird.

In der unteren Endscheibe 11 sind dabei selbstverständlich Öffnungen für eine Wasserabscheidung möglich, so dass abgeschiedenes Wasser in den unterhalb der Endscheibe 11 angeordneten Wassersammelraum 7 gelangen kann. Bei einem Verstellen der Ablassschraube 9 von ihrer unteren Stellung in die Zwischenstellung oder von der Zwischenstellung in ihre obere Stellung erfolgt ein Einschrauben der Ablassschraube 9 in den Filtergehäusetopf 2.

Betrachtet man weiter die Fig. 1 bis 6, so kann man erkennen, dass das Ringfilterelement 5 über ein erstes Gewinde 18 mit dem Filtergehäusetopf 2 verbunden ist. Ein von der unteren Endscheibe 11 des Ringfilterelements 15 konzentrisch und axial abstehender Dom 19 weist dabei ein durch Freigänge 20 (vgl. Fig. 1) unterbrochenes Außengewinde auf, wobei zugleich axial von dem Filtergehäusetopf 2 abstehend und hohlzylindrisch angeordnete Federelemente 21 vorgesehen sind, an denen jeweils ein komplementär zum Außengewinde ausgebildeter Innengewindeabschnitt angeordnet ist und wobei das Außengewinde und das Innengewinde zusammen das erste Gewinde 18 bilden. Jeder Innengewindeabschnitt erstreckt sich dabei über einen längeren Umfangsabschnitt als ein Freigang 20, d.h. über einen längeren Kreissegmentabschnitt. Darüber hinaus ist das erste Gewinde 18 gegenläufig zu dem zweiten Gewinde 8 zwischen der Ablassschraube 9 und dem Filtergehäusetopf 2 ausgebildet.

Die Federelemente 21 ermöglichen aufgrund ihrer zumindest geringfügigen radialen Elastizität auch ein Einstecken des Ringfilterelements 5 in den Filtergehäusetopf 2 von oben, da in diesem Fall die Federelemente 21 einfach elastisch radial nach außen federn. Nach Zusammenwirken mit dem Außengewinde am Dom 19 federn die Federelemente 21 radial nach innen zurück und bilden das erste Gewinde 18. Zum Überschieben des Außengewindes über das Innengewinde weisen beide Gewinde Gleitflächen 22 auf.

Vorzugsweise sind dabei insgesamt acht Federelemente 21 mit jeweils einem Innengewindeabschnitt vorgesehen. Das Außengewinde besitzt üblicherweise insgesamt sechs Freigänge 20. Der Dom 19 und das Außengewinde mit seinen Freigängen 20 sind dabei vorzugsweise einstückig mit der unteren Endscheibe 11 ausgebildet, insbesondere als gemeinsames Kunststoffspritzgussteil, aber durch eine einerseits qualitativ hochwertige und andererseits kostengünstige Herstellung ermöglicht wird.

Mit der erfindungsgemäßen Filtereinrichtung 1 ist es erstmals möglich, insbesondere bei großen Ringfilterelementen 5, diese leichter auszutauschen, da der erfindungsgemäßen Ablassschraube 9 eine weitere Funktion, nämlich die des Verdrehens und damit auch des Lösens des Ringfilterelements 5 sowie des Herausdrückens desselben aus dem Filtergehäusetopf 2 zugewiesen wird.

Die erfindungsgemäße Filtereinrichtung 1 kann dabei wahlweise als hängendes oder als stehendes Filter ausgebildet sein, wobei es gemäß den Darstellungen in den Fig. 1 bis 4 als hängendes Filter ausgebildet ist. Ist sie als stehendes Filter ausgebildet, so könnte das erste Gewinde 18 auch zwischen einer nicht gezeigten oberen Endscheibe des Ringfilterelements 5 und dem Deckel 3 angeordnet sein.

## Patentansprüche

1. Filtereinrichtung (1) mit einem Filtergehäusetopf (2) sowie mit einem darin angeordneten Ringfilterelement (5),
- wobei der Filtergehäusetopf (2) einen zentralen Ablasskanal (6) aufweist, in welchem eine Ablassschraube (9) angeordnet ist, die eine Mitnehmerkontur (10) aufweist,
- wobei das Ringfilterelement (5) eine untere Endscheibe (11) mit einer außenliegenden und im Einbauzustand mit dem Filtergehäusetopf (2) zusammenwirkenden Ringdichtung (12) und eine mit der Mitnehmerkontur (10) zusammenwirkenden Gegenmitnehmerkontur (13) aufweist,
**dadurch gekennzeichnet,**
- **dass** die Ablassschraube (9) zwischen zumindest drei Stellungen verstellbar ist, nämlich
- einer unteren Stellung, in welcher die Ablassschraube (9) den Ablasskanal (6) dicht verschließt,
- einer Zwischenstellung, in welcher die Ablassschraube (9) den Ablasskanal (6) freigibt aber noch nicht über ihre Mitnehmerkontur (10) mit der ringfilterelementseitigen Gegenmitnehmerkontur (13) zusammenwirkt,
- einer oberen Stellung, in welcher die Ablassschraube (9) den Ablasskanal (6) freigibt und über ihre Mitnehmerkontur (10) mit der ringfilterelementseitigen Gegenmitnehmerkontur (13) zusammenwirkt, wodurch ein Verdrehen der Ablassschraube (9) ein Verdrehen des Ringfilterelements (5) bewirkt.

2. Filtereinrichtung nach Anspruch 1,
**dadurch gekennzeichnet,**
- **dass** die ablassschraubenseitige Mitnehmerkontur (10) zumindest zwei, insbesondere axial und/oder radial abstehende, Flügel (15) aufweist,
- **dass** die Gegenmitnehmerkontur (13) zumindest zwei Anschlagselemente (16) aufweist, die in der oberen Stellung der Ablassschraube (9) mit den Flügeln (15) der ablassschraubenseitigen Mitnehmerkontur (10) zusammenwirken.

3. Filtereinrichtung nach Anspruch 1,
**dadurch gekennzeichnet,**
- **dass** die ablassschraubenseitige Mitnehmerkontur (10) zumindest zwei, insbesondere axial abstehende, keilförmige Mitnehmer (15') aufweist,
- **dass** die Gegenmitnehmerkontur (13) zumindest zwei ebenfalls keilförmige Mitnehmer (16') aufweist, die in der oberen Stellung der Ablassschraube (9) mit den Mitnehmern (15') der ablassschraubenseitigen Mitnehmerkontur (10) zusammenwirken.

4. Filtereinrichtung nach einem der Ansprüche 1 bis 3,
**dadurch gekennzeichnet,**
**dass** die Ablassschraube (9) eine Ringdichtung (14) aufweist, die in der unteren Stellung der Ablassschraube (9) dicht im Ablasskanal (6) angeordnet ist.

5. Filtereinrichtung nach einem der Ansprüche 1 bis 4,
**dadurch gekennzeichnet,**
**dass** der Filtergehäusetopf (2) einen zylindrischen Dichtungsabschnitt (17) aufweist, in welchem die Ringdichtung (12) der unteren Endscheibe (11) des Ringfilterelements (5) bei sich in ihrer unteren Stellung und ihrer Zwischenstellung befindenden Ablassschraube (9) dicht anliegt.

6. Filtereinrichtung nach einem der Ansprüche 1 bis 5,
**dadurch gekennzeichnet,**
- **dass** das Ringfilterelement (5) über eine erstes Gewinde (18) mit dem Filtergehäusetopf (2) verbunden ist,
- **dass** ein von der unteren Endscheibe (11) des Ringfilterelements (5) zentrisch und axial abstehender Dom (19) mit einem durch Freigänge (20) unterbrochenen Außengewinde und axial von dem Filtergehäusetopf (2) abstehende und hohlzylindrisch angeordnete Federelemente (21) vorgesehen sind, an denen jeweils ein komplementär zum Außengewinde ausgebildeter Innengewindeabschnitt angeordnet ist, wobei das Außengewinde und das Innengewinde zusammen das erste Gewinde (18) bilden,
- **dass** sich jeder Innengewindeabschnitt über einen längeren Umfangsabschnitt erstreckt als ein Freigang (20),
- **dass** das erste Gewinde (18) gegenläufig zu einem zwischen dem Filtergehäusetopf (2) und der Ablassschraube (9) angeordneten zweiten Gewinde (8) ausgebildet ist.

7. Filtereinrichtung nach Anspruch 6,
**dadurch gekennzeichnet,**
**dass** insgesamt acht Federelemente (21) mit jeweils einem Innengewindeabschnitt vorgesehen sind.

8. Filtereinrichtung nach Anspruch 6 oder 7,
**dadurch gekennzeichnet,**
**dass** das Außengewinde insgesamt sechs Freigänge (20) aufweist.

9. Filtereinrichtung nach einem der Ansprüche 6 bis 8,
**dadurch gekennzeichnet,**
**dass** der Dom (19) und das Außengewinde mit seinen Freigängen (20) einstückig mit der unteren Endscheibe (11) ausgebildet sind.

10. Filtereinrichtung nach einem der Ansprüche 1 bis 9,
**dadurch gekennzeichnet,**
**dass** die Filtereinrichtung (1) als Kraftstofffilter oder als Schmierstofffilter ausgebildet ist.

## Claims

1. Filter device (1) having a filter housing jar (2) and a ring filter element (5) arranged therein,
- wherein the filter housing jar (2) has a central drain channel (6), in which a drain screw (9) having a driver contour (10) is arranged,
- wherein the ring filter element (5) has a lower end disc (11), having a ring seal (12) lying on the outside and, in the installed state, interacting with the filter housing jar (2) and having a counter-driver contour (13) interacting with the driver contour (10), **characterised in that**
- the drain screw (9) is adjustable between at least three positions, namely
- a lower position, in which the drain screw (9) tightly closes the drain channel (6),
- an intermediate position, in which the drain screw (9) frees the drain channel (6), but does not yet interact with the counter-driver contour (13) on the ring filter element side via the driver contour (10) thereof,
- an upper position, in which the drain screw (9) frees the drain channel (6) and interacts with the counter-driver contour (13) on the ring filter element side via the driver contour (10) thereof, by way of which a twisting of the drain screw (9) causes a twisting of the ring filter element (5).

2. Filter device according to claim 1,
**characterised in that**
- the driver contour (10) on the drain screw side has at least two wings (15), in particular projecting axially and/or radially,
- the counter-driver contour (13) has at least two stop elements (16), which, in the upper position of the drain screw (9), interact with the wings (15) of the driver contour (10) on the drain screw side.

3. Filter device according to claim 1,
**characterised in that**
- the driver contour (10) on the drain screw side has at least two wedge-shaped drivers (15'), in particular projecting axially,
- the counter-driver contour (13) has at least two likewise wedge-shaped drivers (16'), which, in the upper position of the drain screw (9), interact with the drivers (15') of the driver contour (10) on the drain screw side.

4. Filter device according to any one of claims 1 to 3,
**characterised in that**
the drain screw (9) has a ring seal (14), which, in the lower position of the drain screw (9), is arranged tight in the drain channel (6).

5. Filter device according to any one of claims 1 to 4,
**characterised in that**
the filter housing jar (2) has a cylindrical sealing portion (17), in which the ring seal (12) of the lower end disc (11) of the ring filter element (5) lies tightly, when the drain screw (9) is in its lower position and in its intermediate position.

6. Filter device according to any one of claims 1 to 5,
**characterised in that**
- the ring filter element (5) is connected with the filter housing jar (2) via a first thread (18),
- a dome (19) projecting centrically and axially from the lower end disc (11) of the ring filter element (5), with an external thread interrupted by clearances (20), and spring elements (21) projecting axially from the filter housing jar (2) and arranged hollow-cylindrically are provided, on each of which an internal thread portion configured in a complementary manner to the external thread is arranged, the external thread and the internal thread together forming the first thread (18),
- each internal thread portion extends over a longer circumferential portion than a clearance (20),
- the first thread (18) is configured in an opposite direction to a second thread (8) arranged between the filter housing jar (2) and the drain screw (9).

7. Filter device according to claim 6,
**characterised in that**
eight spring elements (21) in total are provided, each with one internal thread portion.

8. Filter device according to claim 6 or 7,
**characterised in that**
the external thread defines six clearances (20) in total.

9. Filter device according to any one of claims 6 to 8,
**characterised in that**
the dome (19) and the external thread with its clearances (20) are configured integrally with the lower end disc (11).

10. Filter device according to any one of claims 1 to 9,
**characterised in that**
the filter device (1) is configured as fuel filter or as lubricant filter.

## Revendications

1. Dispositif de filtration (1) avec un pot de boîtier de filtre (2) ainsi qu'avec un élément filtrant annulaire (5) disposé dans celui-ci,
- dans lequel le pot de boîtier de filtre (2) présente un conduit de vidange (6) central, dans lequel une vis de vidange (9) est disposée, qui présente un contour d'entraînement (10),
- dans lequel l'élément filtrant annulaire (5) présente un disque d'extrémité inférieur (11) avec un joint d'étanchéité annulaire (12) situé à l'extérieur et coopérant dans l'état monté avec le pot de boîtier de filtre (2) et un contour d'entraînement complémentaire (13) coopérant avec le contour d'entraînement (10),
**caractérisé en ce**
- **que** la vis de vidange (9) peut être déplacée entre au moins trois positions, à savoir
- une position inférieure, dans laquelle la vis de vidange (9) ferme le conduit de vidange (6) de manière étanche,
- une position intermédiaire, dans laquelle la vis de vidange (9) libère le conduit de vidange (6) mais ne coopère pas encore avec le contour d'entraînement complémentaire (13) côté élément filtrant annulaire par l'intermédiaire de son contour d'entraînement (10),
- une position supérieure, dans laquelle la vis de vidange (9) libère le conduit de vidange (6) et coopère avec le contour d'entraînement complémentaire (13) côté élément filtrant annulaire par l'intermédiaire de son contour d'entraînement (10), ce qui a pour effet qu'une rotation de la vis de vidange (9) provoque une rotation de l'élément filtrant annulaire (5).

2. Dispositif de filtration selon la revendication 1,
**caractérisé en ce**
- **que** le contour d'entraînement (10) côté vis de vidange présente au moins deux ailettes (15), faisant saillie en particulier axialement et/ou radialement,
- **que** le contour d'entraînement complémentaire (13) présente au moins deux éléments de butée (16), qui, dans la position supérieure de la vis de vidange (9), coopèrent avec les ailettes (15) du contour d'entraînement (10) côté vis de vidange.

3. Dispositif de filtration selon la revendication 1,
**caractérisé en ce**
- **que** le contour d'entraînement (10) côté vis de vidange présente au moins deux entraîneurs (15') cunéiformes, faisant saillie en particulier axialement,
- **que** le contour d'entraînement complémentaire (13) présente au moins deux entraîneurs (16') également cunéiformes, qui, dans la position supérieure de la vis de vidange (9), coopèrent avec les entraîneurs (15') du contour d'entraînement (10) côté vis de vidange.

4. Dispositif de filtration selon l'une quelconque des revendications 1 à 3,
**caractérisé en ce**
**que** la vis de vidange (9) présente un joint d'étanchéité annulaire (14), qui, dans la position inférieure de la vis de vidange (9), est disposé de manière étanche dans le conduit de vidange (6).

5. Dispositif de filtration selon l'une quelconque des revendications 1 à 4,
**caractérisé en ce**
**que** le pot de boîtier de filtre (2) présente une partie d'étanchéité cylindrique (17), dans laquelle le joint d'étanchéité annulaire (12) du disque d'extrémité inférieur (11) de l'élément filtrant annulaire (5) s'applique de manière étanche lorsque la vis de vidange (9) se trouve dans sa position inférieure et sa position intermédiaire.

6. Dispositif de filtration selon l'une quelconque des revendications 1 à 5,
**caractérisé en ce**
- **que** l'élément filtrant annulaire (5) est relié au pot de boîtier de filtre (2) par l'intermédiaire d'un premier filetage (18),
- **qu'**un dôme (19) faisant saillie de manière centrale et axiale du disque d'extrémité inférieur (11) de l'élément filtrant annulaire (5), avec un filetage mâle interrompu par des passages libres (20), et des éléments ressorts (21) faisant saillie axialement du pot de boîtier de filtre (2) et disposés en cylindre creux, sur lesquels est disposée respectivement une partie de filetage femelle réalisée de manière complémentaire au filetage mâle, sont prévus, dans lequel le filetage mâle et le filetage femelle forment conjointement le premier filetage (18),
- **que** chaque partie de filetage femelle s'étend sur une partie périphérique plus longue qu'un passage libre (20),
- **que** le premier filetage (18) est réalisé en sens contraire d'un second filetage (8) disposé entre le pot de boîtier de filtre (2) et la vis de vidange (9).

7. Dispositif de filtration selon la revendication 6,
**caractérisé en ce**
**qu'**au total huit éléments ressorts (21) sont pourvus respectivement d'une partie de filetage femelle.

8. Dispositif de filtration selon la revendication 6 ou 7,
**caractérisé en ce**
**que** le filetage mâle présente au total six passages libres (20).

9. Dispositif de filtration selon l'une quelconque des revendications 6 à 8,
**caractérisé en ce**
**que** le dôme (19) et le filetage mâle avec ses passages libres (20) sont réalisés d'une seule pièce avec le disque d'extrémité inférieur (11).

10. Dispositif de filtration selon l'une quelconque des revendications 1 à 9,
**caractérisé en ce**
**que** le dispositif de filtration (1) est réalisé en tant que filtre à carburant ou en tant que filtre à lubrifiant.
